# EUROPÄISCHE PATENTANMELDUNG

(11) **EP 0 673 736 A1**
(43) Veröffentlichungstag der Anmeldung: **27.09.1995**
(21) Anmeldenummer: 95101775.5
(22) Anmeldetag: 09.02.1995
(51) Int. Cl.: B29C 33/60, B29C 37/00, B05B 5/03

(54) **Verfahren zur Herstellung eines Gummiartikels**

(30) Priorität: 15.03.1994 DE 4408793
(71) Anmelder: Continental Aktiengesellschaft, D-30165 Hannover (DE)
(72) Erfinder: Rickert, Hans-Hinrich, D-34497 Korbach-Eppe (DE); Theusner, Martin, Dr., D-30989 Gehrden (DE)

(57) **Zusammenfassung**

Die Erfindung bezieht sich auf ein Verfahren zur Herstellung eines Gummiartikels, wobei zunächst ein Rohling konfektioniert, dieser mit einem Trennmittel beschichtet und dann in eine Vulkanisationsform eingebracht und vulkanisiert wird.

Aufgabe der Erfindung ist es, die von der erforderlichen Trennmittelbeschichtung ausgehende Umweltbelastung zumindest weiter zu senken, vorzugsweise vollständig zu unterbinden.

Zur Lösung dieser Aufgabe wird erfindungsgemäß vorgeschlagen, daß auf den Rohling nach seiner Konfektion ein lösungsmittelfreies Pulver als Trennmittel mittels eines Gas-, vorzugsweise Luftstromes draufgeblasen wird und während des Draufblasens des lösungsmittelfreien Pulvers eine elektrostatische Potentialdifferenz zwischen dem Rohling und dem lösungsmittelfreien Pulver besteht, welches die Pulverpartikel auf die Rohlingsoberfläche treibt, wobei das lösungsmittelfreie Pulver ein Gemisch ist, das mindestens 10 % Gummirauhmehl (vulcanized rubber powder) und einen weiteren, besonders feinpudrigen, die Gummiadhäsion im Pulver unterbindenden Stoff, vorzugsweise Kieselsäure, enthält.

Vorzugsweise wird das Gummirauhmehl aus den äußeren schichten von Reifenseitenwänden und/oder -laufflächen gewonnen oder aus den vulkanisierten Resten von Kautschukmischungen, die für die Herstellung dieser Bauteile vorgesehen waren.

## Beschreibung

Die Erfindung bezieht sich auf ein Verfahren zur Herstellung eines Gummiartikels, wobei zunächst ein Rohling konfektioniert, dieser mit einem Trennmittel beschichtet und dann in eine Vulkanisationsform eingebracht und vulkanisiert wird.

Bislang ist es üblich, als Trennmittel eine flüssige Mischung aufzusprühen. Diese enthält einen beträchtlichen Anteil von Lösungsmitteln. Diese entweichen selbst bei Verwendung einer Lösungsmittelrückgewinnungsanlage teilweise in die Umwelt. Receycling-Verfahren für die Lösungsmittel sind schwierig zu handhaben; selbst wenn Wasser als Lösungsmittel eingesetzt wird, kann eine Belastung der Umwelt, in diesem Falle durch das Abwasser, nicht vollständig vermieden werden.

Aufgabe der Erfindung ist es, die von der erforderlichen Trennmittelbeschichtung ausgehende Umweltbelastung zumindest weiter zu senken, vorzugsweise vollständig zu unterbinden.

Zur Lösung dieser Aufgabe wird erfindungsgemäß vorgeschlagen, daß auf den Rohling nach seiner Konfektion ein lösungsmittelfreies Pulver als Trennmittel mittels eines Gas-, vorzugsweise Luftstromes draufgeblasen wird und während des Draufblasens des lösungsmittelfreien Pulvers eine elektrostatische Potentialdifferenz zwischen dem Rohling und dem lösungsmittelfreien Pulver besteht, welches die Pulverpartikel auf die Rohlingsoberfläche treibt, wobei das lösungsmittelfreie Pulver ein Gemisch ist, das mindestens 10 % Gummirauhmehl (vulcanized rubber powder) und einen weiteren, besonders feinpudrigen, die Gummiadhäsion im Pulver unterbindenden Stoff, vorzugsweise Kieselsäure, enthält.

Vorzugsweise ist das draufzublasende lösungsmittelfreie Pulver eine Mischung, die mindestens 2 % Kieselsäure enthält und dabei beträgt das Produkt aus der Prozentzahl der Kieselsäure und der Oberflächenkennzahl in m²/g mindestens 500. Die Kieselsäure sollte also dann, wenn sie nicht in der bevorzugten hohen, auf die Masse bezogenen Oberfläche (auch "Aktivität" genannt) von 250 m²/g verfügbar ist, umso höher dosiert sein, desto geringer ihre Oberfläche ist. Das draufzublasende lösungsmittelfreie Pulver sollte eine Mischung sein, die Kieselsäure einer Oberfläche von mindestens 100 m²/g, vorzugsweise 200 m²/g bis 400 m²/g enthält.

Vorzugsweise sollte die Differenz zwischen dem Potential des Pulvers und der Pulverdüse einerseits und dem mit Trennmittel zu beschichtenden Rohling andererseits zwischen 15 und 90 kV liegen. Natürlich beziehen sich die kleinen Spannungen auf kleine Rohlinge, wo aufgrund des möglichen kürzeren Abstandes zwischen den Pulverdüsen und dem Rohling und der entsprechend kürzeren Länge der Feldlinien auch hiermit ein ausreichendes Potentialgefälle [V/m] entsteht, wohingegen sich die höheren Spannungswerte auf größere Rohlinge beziehen.

Das Pulver sollte vor dem Austritt aus der Pulverdüse durch dem Fachmann hinlänglich bekannte Vorrichtungen auf etwa das gleiche Potential wie die Austrittsdüse selber gebracht werden. Dies hemmt durch die Abstoßung gleicher Ladungen das Zusammenkleben von Pulver-, insbesondere Gummipartikeln in Ergänzung zum Einsatz eines adhäsionsmindernden Zusatzes, insbesondere Kieselsäure, und fördert die rasche und zielgenaue Beförderung der Pulverpartikel zum Rohling.

Das Draufblasen sollte in einer Kabine ausgeführt werden. Wenn das Potential der Kabine zwischen dem der Pulverdüse und dem des Rohlings liegt, sollte es dicht bei dem der Düse liegen, um so den Pulverniederschlag in der Kabine klein zu halten.

Es ist aber auch möglich, daß die Spannung zwischen Kabine und Rohling noch größer ist als die zwischen Düse und Rohling; dann gibt es praktisch gar keinen Niederschlag.

Vorzugsweise wird der zu beschichtende Rohling auf Erdpotential gelegt zur Vermeidung von Entladungsströmen in der weiteren Verarbeitung.

Gummirauhmehl ist fein zermahlenes Gummi, also vulkanisierter pulverförmiger Kautschuk. Für die Erfindung ist solches Gummirauhmehl besonders gut geeignet, daß durch Zerspanung von unter der Glasübergangstemperatur befindlichem Gummi entsteht. Das Gummi verhält sich dann spröde und es entstehen besonders scharfkantige Späne; die Scharfkantigkeit aber verbessert die Wirkung als Trennmittel. Es ist auch möglich, eine genügende Kantigkeit ohne die viel Energie verzehrende Tiefkühlung durch eine extrem hohe Geschwindigkeit des Zerspanungswerkzeuges zu erreichen, insbesondere dann wenn die Zerspanung in einem kühlenden Bad, zum Beispiel Wasser erfolgt.

Die Verwendung von Gummirauhmehl als Pulvermischungsbestandteil senkt die Entsorgungskosten in der Reifenherstellung ohne negative Auswirkungen in der Arbeitsphysiologie und Ökologie und fördert durch seine Rauhigkeit die erforderliche Entlüftung.

Gemäß Anspruch 8 wird vorzugsweise das Gummirauhmehl aus den äußeren Schichten von Reifenseitenwänden und/oder -laufflächen gewonnen oder aus den vulkanisierten Resten solcher Kautschukmischungen, die für die Herstellung dieser Bauteile vorgesehen waren. Gummirauhmehl dieser Provenienz enthält in den Gummipartikeln eingebunden Alterungsschutzmittel, die für nach dem erfindungsgemäßen Verfahren hergestellte Produktteile wie UV-Strahlung exponierten Reifenseitenwänden vorteilhaft sind. Sie sind ferner frei von störenden Fasern und Butylgummianteilen.

Zum Draufblasen auf die Rohlingsaußenseite empfiehlt sich gemäß Anspruch 4 ein Gummirauhmehlanteil von 90 bis 98 %. Zum Draufblasen auf die Rohlingsinnenseite empfiehlt sich gemäß Anspruch 5 ein Gummirauhmehlanteil von 5 bis 30 %; hier sollte der Rauhmehlanteil kleiner sein, weil ausreichende Gleiteigenschaften zwischen der Rohlingsinnenseite und dem in der Regel verwendeten Blähbalg zur Sicherstellung einer genügenden Blähbalgstandzeit und zur Vermeidung von ungleichmäßigen Verdrängungen des noch zähflüssigen Kautschukes erforderlich sind. Andernfalls könnte es zu Reifenrundlauffehlern infolge ungleichmäßiger Abrollradien und/oder ungleichmäßiger Steifigkeitsverteilung und/oder ungleichmäßiger Massenverteilung kommen.

In Versuchen hat sich ein Kieselsäureanteil zwischen 2 und 6 % für das Draufblasen auf die Rohlingsaußenseite bewährt, insbesondere 3 %. Für die Rohlingsinnenseite sollte dagegen ein höherer Kieselsäureanteil gewählt werden zur Unterstützung der Entlüftungs- und Gleiteigenschaften, nämlich 5 % bis 30 %, vorzugsweise etwa 25 %. Hier kann eine kleinere massenbezogene Oberfläche der Kieselsäure sinnvoll sein, etwa in der Größenordnung von 100 m²/g.

Für das Draufblasen auf die Reifeninnenseite empfiehlt sich ein geringer Zusatz von Graphit zur Verbesserung der Gleiteigenschaften, vorzugsweise bis 8 %, besonders bevorzugt etwa 5 %. Für das Draufblasen auf die Reifenaußenseite sollte auf Graphit verzichtet werden.

Es ist auch ein Zusatz von Ruß möglich, was sich speziell für auf der Innenseite zu verwendende Draufblasmischungen empfiehlt, um eine graue Färbung zu erzielen und bei eventuellem Overspray auf die Außenseite das gewohnte - nämlich schwarze - äußere Erscheinungsbild zu erhalten.

Zur Durchführung des erfindungsgemäßen Verfahrens können die an sich bekannten Pulverbeschichtungsvorrichtungen verwendet werden, die bislang zum Auftrag sinterfähiger "Lack"schichten als Oberflächenveredlung in der Metallindustrie bekannt sind.

Das Überraschungsmoment der vorgestellten Erfindung liegt darin, daß auch die nicht-metallische Oberfläche eines Gummiartikels, insbesondere eines Reifens, sich im Zusammenhang mit zumindest teilweise polaren Pulvermischungen für die Durchführung einer Pulverbeschichtung eignen. Ein Unterschied zur an sich bekannten Pulverbeschichtung von Metallteilen liegt ferner darin, daß hier die Beschichtung der Trennung zwischen Form und Vulkanisat dient und nicht der Oberflächenveredelung des Fertigproduktes.

Zur genauen Abstimmung der Pulvermischung auf den Anwendungsort empfiehlt gemäß Anspruch 11, die Verwendung verschiedener Pulvermischungen für die Innen- und Außenbeschichtung des Rohlings.

Dergleichen ist ohne weiteren Reinigungsaufwand möglich, indem gemäß Anspruch 12 die Beschichtung der Innenseite des Rohlings mittels einer anderen Düse ausgeführt wird als die Beschichtung der Außenseite.

Die Pulvermischung für die Außenbeschichtung von Reifen sollte vorzugsweise gemäß Anspruch 10 weder Ruß noch Graphit noch Lösungsmittel wie Benzin enthalten, also ausschließlich aus Gummirauhmehl und Kieselsäure bestehen. So wird das gewohnte Erscheinungsbild - das vom Kunden erwartete mattschwarze Aussehen der Reifenaußenseite - erhalten und jede Verschmutzung am Arbeitsplatz unterbunden.

Die Erfindung kann selbstverständlich auch in der Herstellung anderer, dem Reifen ähnlicher Gummiartikel, z. B. Luftfedern, eingesetzt werden.

Mit Graphit in der Rohlingsaußenbeschichtung hergestellte Reifen weisen in der Regel eine dünne kohlenstoffreichere Schicht unmittelbar an ihrer Oberfläche auf. Im Bereich der Laufflächenperipherie ist diese bereits nach wenigen Einfahrkilometern abgenutzt. Im Bereich der Rillenflanken bleibt der reibungsvermindernde Effekt wesentlich länger bestehen und ist dort im Sinne unserer europäischen Patentanmeldung 92 106 706 als Mittel gegen das Steinefangen günstig.

Die für die Außenbeschichtung einzusetzende Pulvermischung enthält vorteilhafterweise gemäß Anspruch 13 kein Glimmer. Auf diese Weise wird ein satt mattschwarzes Erscheinungsbild des Reifens statt eines grauen sicher gestellt. Da gegenüber der Vulkanisationsform kaum Gleitbewegungen stattfinden, ist der reibungsmindernde Effekt von Glimmer hier entbehrlich.

Für die Innenbeschichtung hingegen, die für das Aussehen weniger relevant ist, sollte jedoch gemäß Anspruch 14 die Pulvermischung Glimmer in gemahlener Form enthalten, damit der Blähbalg und die empfindliche dichtende Reifeninnenschicht, die üblicherweise hochviskosen Butylkautschuk enthält, vor zu großem Reibkraftangriff geschützt wird.

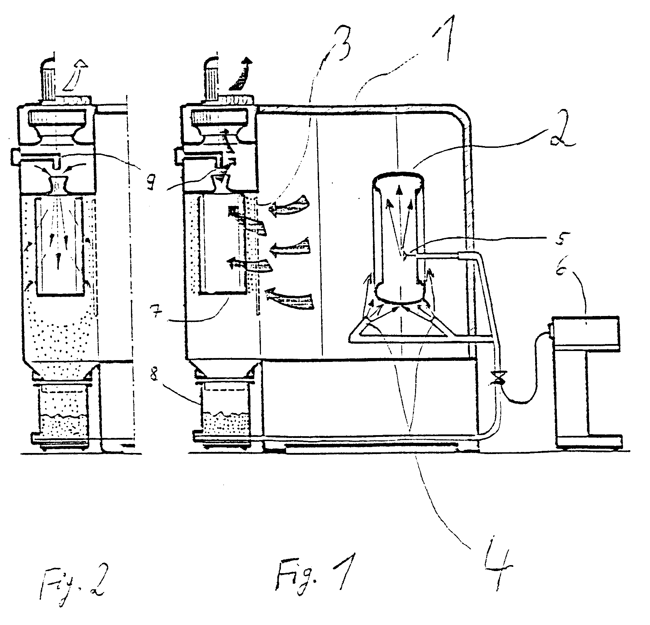

Zur Erläuterung der Erfindung wird eine bevorzugte Mischung zum Draufblasen auf die Reifeninnenseite angegeben:
25 % Glimmer
5 % Graphit
22 % Ruß
24 % Reifenrauhmehl
24 % Kieselsäure
Zum Draufblasen auf die Reifenaußenseite wird folgende Pulvermischung bevorzugt:
97 % Reifenrauhmehl
3 % Kieselsäure
Wird hingegen zur erleichterten Rückführung des daneben geblasenen Pulvers zwecks Ausbildung einer völlig gegenüber der Umwelt abgeschlossenen Fertigung auf eine Differenzierung zwischen Innen- und Außenbeschichtung verzichtet, empfiehlt sich folgende Mischungszusammensetzung:
5 % Glimmer
5 % Ruß
80 % Reifenrauhmehl
10 % Kieselsäure
Zur Veranschaulichung der Erfindung dienen die Figuren 1 und 2. Figur 1 zeigt eine Draufblaskabine 1 mit einem darin angeorneten zu beschichtenden Gummiartikel, hier einem Fahrzeugluftreifen 2. Die Draufblaskabine ist an ihrer Vorder- und Rückseite offen. Im Zusammenspiel mit einer Absaugöffnung 3 wird die Luft in der Umgebung hinreichend frei vom der Trennung dienenden, lösungsmittelfreien Pulver gehalten. Dies ermöglicht das ungestörte Einbringen der zu beschichtenden Rohlinge und den Abtransport der beschichteten Rohlinge zur Vulkanisationspresse.

Es sind zwei Düsen 4 zum Draufblasen auf die Außenseite und eine Düse 5 zum Draufblasen auf die Innenseite der Reifenrohlinge innerhalb der Draufblaskabine angeordnet. Diese geringe Düsenanzahl reicht aus, wenn die zu beschichtenden Rohlinge während des Sprühens gedreht werden.

Vorzugsweise erfolgt die Beschickung der Draufblaskabine und die Regelung und Steuerung des Draufblasens über ein in der Nähe angeordnetes computerunterstütztes Pult 6.

Die abgesaugte Luft wird vorzugsweise, wie hier dargestellt, durch eine verschließbare Öffnung 3 abgesaugt. Dies ermöglicht ein automatisiertes Reinigen der Abluftfilter 7 dadurch, daß zur Reinigung der Luftstrom umgekehrt wird während die Öffnung 3 verschlossen ist, sodaß der freigesetzte Pulverstaub nicht in die Sprühkabine zurückgelangt sondern in einen Behälter 8.

Diese Umkehrung des Luftstromes wird durch Einblasen von Luft durch die Düse 9 von oben in den Filter 7 erreicht. Dieser Reinigungsschritt ist in der links daneben dargestellten Figur 2 gezeigt.

Die hier gezeigte Anlage, die auf die Innen- und Außenseite des Rohlings gleichzeitig Pulver draufbläst, wird vorzugsweise mit einer Identischen Pulvermischung für beide Seiten betrieben; auf diese Weise kann das im Behälter 8 gesammelte Pulver wieder den Düsen 4 und 5 zugeführt werden.

Die Erfindung erlaubt eine deutliche Entlastung der Umwelt bei nur unwesentlicher Erhöhung der Produktionskosten ohne Beeinträchtigung der Qualität der Fertigprodukte.

## Patentansprüche

1. Verfahren zur Herstellung eines Gummiartikels, wobei zunächst ein Rohling konfektioniert, dieser mit einem Trennmittel beschichtet und dann in eine Vulkanisationsform eingebracht und vulkanisiert wird,
**dadurch gekennzeichnet,** daß auf den Rohling nach seiner Konfektion ein lösungsmittelfreies Pulver als Trennmittel mittels eines Gas-, vorzugsweise Luftstromes draufgeblasen wird und während des Draufblasens des lösungsmittelfreien Pulvers eine elektrostatische Potentialdifferenz zwischen dem Rohling und dem lösungsmittelfreien Pulver besteht, das die Pulverpartikel auf die Rohlingsoberfläche treibt, wobei das lösungsmittelfreie Pulver ein Gemisch ist, das mindestens 10 % Gummirauhmehl (vulcanized rubber powder) und einem weiteren, besonders feinpudrigen, die Gummidhäsion im lösungsmittelfreien Pulver unterbindenden Stoff, vorzugsweise Kieselsäure, enthält.

2. Verfahren nach Anspruch 1 dadurch gekennzeichnet, daß das draufzublasende lösungsmittelfreie Pulver eine Mischung ist, die mindestens 2 % Kieselsäure enthält und wobei das Produkt aus der Prozentzahl der Kieselsäure und der Oberflächenkennzahl in m²/g mindestens 500 beträgt.

3. Verfahren nach Anspruch 1 dadurch gekennzeichnet, daß das draufzublasende lösungsmittelfreie Pulver eine Mischung ist, die Kieselsäure einer Oberfläche von mindestens 100 m²/g, vorzugsweise 200 m²/g bis 400 m²/g enthält.

4. Verfahren nach Anspruch 1 dadurch gekennzeichnet, daß es zum Draufblasen auf die Rohligsaußenseite verwendet wird und der Gummirauhmehlanteil mindestens 90 % beträgt.

5. Verfahren nach Anspruch 1 dadurch gekennzeichnet, daß es zum Draufblasen auf die Rohligsinnenseite verwendet wird und der Gummirauhmehlanteil zwischen 5 und 30 % beträgt.

6. Verfahren nach Anspruch 1 dadurch gekennzeichnet, daß es zum Draufblasen auf die Rohligsinnenseite verwendet wird und das Pulver 5 bis 30 % Kieselsäure enthält.

7. Verfahren nach Anspruch 1 dadurch gekennzeichnet, daß es zum Draufblasen auf die Rohligsaußenseite verwendet wird und das Pulver bis zu 6 % Kieselsäure enthält.

8. Verfahren nach Anspruch 1 dadurch gekennzeichnet, daß das in der Mischung verwendete Gummiraumehl aus Gummimischungen gewonnen wird, die Alterungsschutzmittel enthalten aber frei sind von Fasern und Butylgummianteilen.

9. Verfahren nach Anspruch 1, dadurch gekennzeichnet, daß die elektrostatisch aufzubringende Pulvermischung höchstens 5 % Ruß und höchstens 8 % Graphit enthält.

10. Verfahren nach Anspruch 1 zum Beschichten der Rohlingsaußenseite mit einem pulverförmigen Trennmittel, vorzugsweise nach Anspruch 7, dadurch gekennzeichnet, daß die elektrostatisch aufzubringende Pulvermischung ausschließlich Kieselsäure und Gummiraumehl enthält, insbesondere kein Ruß, kein Graphit und kein Lösungsmittel wie Benzin.

11. Verfahren nach Anspruch 1 dadurch gekennzeichnet, daß die Pulvermischung für die Außenbeschichtung verschieden ist von der Pulvermischung der Innenbeschichtung des Rohlings.

12. Verfahren nach Anspruch 1, vorzugsweise nach 11, dadurch gekennzeichnet, daß die Beschichtung der Innenseite des Rohlings mittels einer anderen Düse erfolgt als die Beschichtung der Außenseite.

13. Verfahren nach Anspruch 11 dadurch gekennzeichnet, daß die Pulvermischung für die Außenbeschichtung kein Glimmer enthält.

14. Verfahren nach Anspruch 11 dadurch gekennzeichnet, daß die Pulvermischung für die Innenbeschichtung Glimmer, oder Talkum vorzugsweise zusammen 15 % bis 50 %, enthält.
